(19) Europäisches Patentamt
European Patent Office
Office européen des brevets

(11) **EP 2 207 664 B1**

(12) **EUROPÄISCHE PATENTSCHRIFT**

(45) Veröffentlichungstag und Bekanntmachung des Hinweises auf die Patenterteilung:
**07.09.2011 Patentblatt 2011/36**

(21) Anmeldenummer: **08842717.4**

(22) Anmeldetag: **23.10.2008**

(51) Int Cl.:
***B29C 49/78*** *(2006.01)*

(86) Internationale Anmeldenummer:
**PCT/EP2008/064336**

(87) Internationale Veröffentlichungsnummer:
**WO 2009/053418 (30.04.2009 Gazette 2009/18)**

(54) **BLASMASCHINE FÜR KUNSTSTOFFBEHÄLTNISSE UND VERFAHREN ZU DEREN STEUERUNG**

BLOW-MOLDING MACHINE FOR PLASTIC CONTAINERS AND METHOD FOR THE CONTROL THEREOF

SOUFFLEUSE POUR DES RÉCIPIENTS EN PLASTIQUE ET PROCÉDÉ DE COMMANDE CORRESPONDANT

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **23.10.2007 DE 102007050908**
**26.07.2008 DE 102008034934**

(43) Veröffentlichungstag der Anmeldung:
**21.07.2010 Patentblatt 2010/29**

(73) Patentinhaber: **Krones AG**
**93073 Neutraubling (DE)**

(72) Erfinder: **STEINER, Andreas**
**93173 Wenzenbach (DE)**

(74) Vertreter: **Hannke, Christian**
**Hannke Bittner & Partner**
**Patent- und Rechtsanwälte**
**Ägidienplatz 7**
**93047 Regensburg (DE)**

(56) Entgegenhaltungen:
**EP-A- 0 693 357      WO-A-2007/028493**
**DE-A1- 10 116 665      DE-A1- 19 743 600**
**DE-A1-102004 026 640      US-A1- 2005 194 705**
**US-A1- 2006 097 417**

EP 2 207 664 B1

**Beschreibung**

Die vorliegende Erfindung bezieht sich auf eine Blasmaschine zum Blasen von Kunststoffbehältnissen. Derartige Blasmaschinen bzw. Anordnungen zur Herstellung von Kunststoffbehältnissen sind aus dem Stand der Technik bekannt. Diese Anordnungen weisen üblicherweise eine Heizstrecke bzw. einen Ofen auf, innerhalb dessen vorformlinge zunächst erwärmt werden. Anschließend werden die erwärmten Vorformlinge mittels einer Blaseinrichtung, welche eine Blasform aufweist, insbesondere durch Druckluft expandiert. Dabei erfolgt die Steuerung sowohl des Ofens als auch der Blaseinrichtung aufgrund einer Vielzahl von Stellgrößen, wie beispielsweise der Temperatur, der Fläche, auf der die Vorformlinge erwärmt werden, eines Druckverlaufs für den eigentlichen Blasvorgang und dergleichen.

Diese einzelnen Stellgrößen sind, um ein optimales Ergebnis zu erreichen, möglichst sorgfältig und genau aufeinander abzustimmen. Zu diesem Zweck ist es aus dem Stand der Technik bekannt, dass die Qualität der Behältnisse durch einen Maschinenbediener überprüft wird. Falls die Qualität von einem bestimmten Sollwert abweicht, entscheidet er selbst, welche Parameter er an der Blasmaschine oder der Heizeinrichtung vornimmt. Nach dieser Änderung überprüft er wieder die Behältnisse und trifft möglicherweise weitere Anpassungen. Dabei müssen bei unterschiedlichen Kombinationen aus Vorformlingen und fertigen Behältnissen oftmals mehrere unterschiedliche Qualitätskriterien überwacht und auch mehrere unterschiedliche Stellgrößen angesteuert bzw. angepasst werden.

Aus der DE 10 2005 044 206 A1 ist ein Verfahren zur Qualitätskontrolle von Kunststoffbehältern bekannt. Genauer wird hier ein Verfahren zur Qualitätskontrolle eines streckgeblasenen Kunststoffbehälters durch Inspektion seines Bodens bereitgestellt.

Die EP 1 175 990 B1 beschreibt eine automatisierte Steuerung der Materialverteilung in einem streckblasgeformten Gegenstand. Bei diesem Verfahren werden an den Vorformlingen Indikatoren angebracht und anschließend nach dem Expandieren des Behältnisses diese Indikatoren bzw. die Längenverhältnisse zwischen diesen Indikatoren überwacht. Über ein Rückkopplungssteuersignal werden wiederum die Bearbeitungseinheiten dieser Streckblasmaschine angesteuert.

Die WO 2006/087251 A1 beschreibt ein Verfahren zum Steuern einer Behältnisblasmaschine. Bei diesem Verfahren wird die Masse eines Bereichs eines Behältnisses abgeschätzt, anschließend mit einer Referenzmasse verglichen und weiterhin werden die Parameter für den Blasvorgang in Reaktion auf eventuell detektierte Masseveränderungen angepasst.

Aus der DE 101 16 665 A1 ist ein Verfahren zur Steuerung eines Blasvorgangs bei der Herstellung von Behältern aus einem thermoplastischen Material bekannt. Dabei wird eine Wandstärke des Behältnisses unmittelbar nach dessen Herstellung erfasst und mit einer Sollwandstärke verglichen. Aufgrund dieses Vergleichsergebnisses wird mindest ein Blasparameter verändert.

Die DE 10 2004 026 640 A1 beschreibt eine Vorrichtung und ein Verfahren zur Automatisierung des Kunststoff-Extrusionsblasens. Dabei ist eine Einrichtung zur Analyse und Regelung einer Vielzahl von Prozessparametern vorgesehen und diese Einrichtung ist ein sich selbst kontrollierendes und selbst regulierendes elektronisches Neuro - Fuzzy - System. Einwirkungen eines Maschinenbenutzers auf dieses System sind jedoch hier nicht zugelassen.

Dabei wird auch bei diesem Verfahren in einer genau vorbestimmten Weise auf eine bestimmte Änderung eines Istzustands bzgl. eines Sollzustands reagiert.

In der Praxis können jedoch die unterschiedlichsten Änderungen hinsichtlich des Behältnisprofils auftreten und der Maschinenbediener hat auch mehrere Möglichkeiten, auf ein bestimmtes Behältnisprofil zu reagieren.

Der vorliegenden Erfindung liegt daher die Aufgabe zugrunde, durch Steuerungs- bzw. Regelungsmöglichkeiten das Verhalten eines Maschinenbedieners nachzubilden. Dies wird erfindungsgemäß durch eine Vorrichtung zum Herstellen von Behältnissen nach Anspruch 1 und ein Verfahren zum Herstellen von Behältnissen nach Anspruch 6 erreicht. Vorteilhafte Ausführungsformen und Weiterbildungen sind Gegenstand der Unteransprüche.

Eine erfindungsgemäße Vorrichtung nach Anspruch 1 weist eine Erwärmungseinheit, welche Vorformlinge erwärmt, sowie wenigstens eine Blaseinheit, welche erwärmte Vorformlinge zu Behältnissen expandiert, auf. Weiterhin ist wenigstens eine Sensoreinrichtung vorgesehen, welche wenigstens eine für den physikalischen Zustand der Vorformlinge oder Behältnisse repräsentative Messgröße ausgibt. Weiterhin sind wenigstens zwei Stellgrößen der Erwärmungseinheit oder der Blaseinheit veränderbar und die Vorrichtung weist eine Regeleinheit auf, welche derart gestaltet ist, dass sie die Stellgrößen in Abhängigkeit von der Messgröße regelt. Die Regeleinheit weist eine Zuordnungseinrichtung auf, welche vorgegebenen Messgrößen Stellgrößen zuordnet, wobei diese Zuordnungen zwischen den Messgrößen und den Stellgrößen frei vorgebbar sind.

Während im Stand der Technik feste Regelungsmechanismen vorgegebenen sind, ist es erfindungsgemäß möglich, die Parameter für die Anpassungen frei zu wählen. So kann eine Situation simuliert werden, in der der Maschinenbenutzer ein Behältnis selbst analysiert und entsprechende Änderungen der Parameter vornimmt. Der Benutzer kann hier selbst Grenzwerte oder Parameter festsetzen, in Reaktion auf welche ebenfalls festsetzbare Stellgrößen verändert werden. Vorzugsweise werden nicht (nur) die Messgrößen ausgegeben, sondern auch beispielsweise Differenzen oder sonstige Abweichungen von jeweiligen Referenzwerten.

Die jeweiligen Zuordnungen können beispielsweise in der Art einer Matrize erfolgen, wobei in einer Spalte alle Messgrößen dargestellt sind und in den entsprechenden Zeilen die jeweiligen Stellgrößen. Wie auf bestimmte Messgrößen bzw. bestimmte Variationen von Messgrößen reagiert wird, kann der Benutzer völlig frei einstellen. So kann beispielsweise auf ein zu hohes Gewicht eines Bodenbereichs des Behältnisses mit einem erhöhten Blasdruck zum Blasen der Behältnisse reagiert werden.

Damit wird ein geschlossener Regelkreis in der Art einer elektronischen Plattform angeboten, in der prinzipiell alle Online-Messungen bzw. Messgrößen der Behältnisse mit allen Ansteuerungsparametern der Blasmaschine und gegebenenfalls auch des Ofens modular in einem Regelkreis kombiniert werden können. So kann beispielsweise eine Messgrößenabweichung von einem bestimmten Sollwert gegebenenfalls nach Multiplikation mit einem Normierungsfaktor direkt in eine bestimmte Änderung einer Stellgröße umgesetzt werden. Auf diese Weise kann exakt das Verhalten eines Maschinenbedieners nachgebildet werden.

Dazu werden bevorzugt alle Qualitätsmerkmale, die von dem Maschinenbediener beobachtet werden, online gemessen und quantifiziert.

Weiterhin ist es auch möglich, dass die Sensoreinrichtungen selbst nicht direkt die Messwerte ausgeben, sondern lediglich Signale, aus denen wiederum die Messwerte ableitbar.

Wie gesagt, kann es sich bei den Messwerten auch um Differenzen von einem Referenzwert handeln. Vorteilhaft ist auch eine Vergleichseinrichtung vorgesehen, die die gemessenen Messwerte mit Referenzwerten vergleicht und einen Differenzwert ausgibt.

Bei einer weiteren vorteilhaften Ausführungsform weist die Vorrichtung eine Speichereinrichtung auf, in der getroffene Zuordnungen ablegbar sind. Durch diese Speichereinrichtung können in der Historie der Vorrichtung durchgeführte Änderungen dokumentiert werden und auf diese Weise kann eine lernfähige Steuerung geschaffen werden. So kann z.B. abgespeichert werden, auf welche Messgröße mit welcher Stellgröße in welchem Umfang reagiert wurde. Aus den nachfolgenden Messungen kann abgeleitet werden, ob die Anwendung der Stellgröße korrekt bzw. ausreichend war. Diese Information kann bei der nächsten Abweichung der gleichen Messgröße als Grundlage für die Anpassung der Stellgröße dienen. Auf diese Weise können die Regelvorgänge sehr schnell durchgeführt werden. Eine solche schnellere Anpassung der Regelvorgänge könnte vorzugsweise mit einem "genetischen Lernalgorithmus" durchgeführt werden.

Vorzugsweise sind mehrere Sensoreinrichtungen vorgesehen, welche mehrere für physikalische Zustände der Vorformlinge oder Behältnisse repräsentative Messgrößen ausgeben. Auch ist es möglich, dass eine Sensoreinrichtung mehrere derartige repräsentative Messgrößen ausgibt. Insbesondere in dem Fall, in dem mehrere Messgrößen ausgegeben werden, eignet sich eine erfindungsgemäße Vorrichtung, welche im Prinzip beliebige Zuordnungen zwischen den einzelnen Messgrößen und den Stellgrößen erlaubt. Genauer können mit der erfindungsgemäßen Vorrichtung prinzipiell alle Online-Messungen der Messgröße bezüglich der Flaschen mit unterschiedlichsten Ansteuerungsparametern der Blasmaschine kombiniert werden. Weiterhin können für die Bestimmung der Messgrößen auch noch Mittelwerte gebildet werden, um eine natürliche Streuung zu dämpfen. Daneben kann auch bevorzugt die Anzahl der jeweils im Rahmen einer Messgrößenbildung berücksichtigten Behältnisse variiert werden. Auch die Taktung der jeweils vorzunehmenden Messwertbildung kann definiert werden. Vorzugsweise ist ein Normierungsfaktor vorgesehen, mit dem die Abhängigkeit zwischen einer Messgrößenabweichung und einer Änderung einer Stellgröße eingestellt werden kann. In diesem Fall ergibt sich folgende Beziehung:

```
Messgrößenabweichung von einem Sollwert x Normierungsfaktor =
Änderung der Stellgröße.
```

Zudem ist es denkbar, die Bereiche, innerhalb derer die Stellgrößen verändert werden können, zu beschränken, damit eine Regelung innerhalb vernünftiger Werte erfolgt. Weiterhin ist es möglich, maximale Abweichungen zu definieren, ab welchen beispielsweise die Produktion unterbrochen werden soll, da ein automatisches Nachregeln nicht mehr möglich ist. Auch kann festgelegt werden, ab welchen Abweichungen ein bestimmter Eingriff vorgenommen werden soll.

Vorzugsweise sind die physikalischen Zustände aus einer Gruppe von physikalischen Zuständen entnommen, welche eine Höhe des Behältnisses, ein Gewicht eines Abschnitts des Behältnisses und insbesondere eines Boden des Behältnisses, einen Druckverlauf während des Blasvorgangs, eine Wandungsdicke des Behältnisses, eine Temperatur des Vorformlings, eine Temperatur einer Mündung des Behältnisses, eine geometrische Position des Anspritzpunktes der Behältnisse, Temperaturprofil des Vorformlings, optische Eigenschaften des Behältnisses - wie Materialeintrübungen oder Halsauszug - Bodenfreiheit, Kristallinität, Größenverhältnisse des Behältnisses, Verstreckungsgrad, Kombinationen hieraus und dergleichen enthält.

Abhängig von der Art der Behältnisse und auch von den jeweiligen Benutzern können unterschiedliche derartige physikalische Zustände maßgeblich sein und auch unterschiedliche Anzahlen an Zuständen. Damit ist bei dieser bevorzugten Ausführungsform die Zuordnungseinrichtung auch hinsichtlich der Anzahl der Messgrößen und der Anzahl der Stellgrößen frei konfigurierbar.

Bei einer weiteren vorteilhaften Ausführungsform sind die Stellgrößen aus einer Gruppe von Stellgrößen ausgewählt, welche einen Vorblasdruck, einen Fertigblasdruck, einen Vorblasbeginn, einen Spülbeginn, eine Temperatur des Vorformlings, eine Temperatur der Wand einer Blasform, eine Temperatur eines Formbodens, einen Zeitpunkt eines Spülbeginns, den Druckverlauf, die Oberflächenkühlung des Vorformlings, die Mündungskühlung des Vorformlings, Kombinationen hieraus oder dergleichen enthält.

Daneben ist es auch möglich, einzelne Messgrößen in Form eines Profils aufzunehmen, beispielsweise ein Temperaturprofil des Vorformlings aufzunehmen.

Die vorliegende Erfindung ist weiterhin auf ein Verfahren zum Herstellen von Behältnissen und insbesondere von Kunststoffbehältnissen gerichtet nach Anspruch 6, wobei in einem ersten Verfahrensschritt Vorformlinge erwärmt werden, in einem weiteren Verfahrenschritt die Vorformlinge zu Behältnissen expandiert werden und wobei mittels wenigstens einer Sensoreinrichtung eine für einen physikalischen Zustand der Vorformlinge oder Behältnisse repräsentative Messgröße ausgegeben wird und wobei wenigstens zwei Stellgrößen der Erwärmungseinheit oder einer Blaseinheit veränderbar sind und eine Regeleinheit die Stellgrößen in Abhängigkeit von den Messgrößen regelt.

Erfindungsgemäß ordnet eine Zuordnungseinheit vorgegebene Messgrößen Stellgrößen zu, wobei diese Zuordnungen zwischen den Messgrößen und den Stellgrößen durch einen Benutzer frei vorgebbar sind.

Damit kann auch erfindungsgemäß ein Verhalten eines Maschinennutzers simuliert werden in dem bestimmte Reaktionen auf bestimmte Abweichungen von Sollwerten frei vorgegebenen werden können.

Bevorzugt werden mit den Zuordnungen die Messgrößen beschreibende Daten abgelegt. So ist es beispielsweise möglich, dass im Rahmen einer Displayaufforderung der Benutzer eingibt, in welcher Weise eine bestimmte Messgröße von der Sollgröße abweicht und auch, wie sich diese Messgrößenabweichung auf einen Zustand des Behältnisses auswirkt. Weiterhin können durch den Benutzer die Gründe für eine vorzunehmende Änderung angegeben werden und es kann genau angegeben werden, mit welchen Abweichungen auf die veränderte Messgröße reagiert werden soll. Diese beschreibenden Daten werden bevorzugt gemeinsam mit den Messgrößen und den veränderten Stellgrößen abgelegt. Auf diese Weise kann ein Selbstlerneffekt der Vorrichtung des Verfahrens erreicht werden. Dabei ist es möglich, neben den Stellgrößen sowohl die Ausgangs- als auch die Zielwerte der Stellgrößen auszugeben.

Bevorzugt werden Hinweise für geeignete Zuordnungen ausgegeben. Insbesondere aufgrund der oben erwähnten gespeicherten Daten kann zu einem späteren Zeitpunkt dem Benutzer ein Hinweis gegeben werden, wie er ein möglicherweise auftretendes Problem lösen kann. Auf diese Weise kann im Laufe des Betriebs der Maschine aufgrund nach und nach gewonnener Erkenntnisse ein stets höherer Automatisierungsgrad erreicht werden.

Vorzugsweise sind neben den Zuordnungskriterien Toleranzgrenzen vorgebbar.

Bei einem weiteren vorteilhaften Verfahren sind die Messgrößen logisch verknüpfbar. So ist es beispielsweise möglich, eine bestimmte Stellgröße nur dann in einer vorgegebenen Weise zu ändern, wenn sich sowohl eine erste Messgröße in einem bestimmten Bereich als auch eine zweite Messgröße sich in einem ebenfalls vorbestimmten Bereich ändert. Auch sind andere logische Verknüpfungen, wie insbesondere ODER -Verknüpfungen, Invertierungen und dergleichen möglich. Entsprechend können auch die Stellgrößen bzw. deren Variationen logisch verknüpft werden. So kann beispielsweise auf eine Varianz einer Messgröße alternativ oder kumulativ durch eine Änderung mehrerer Stellgrößen reagiert werden.

Vorzugsweise sind die Messgrößen Abweichungen zu Referenzwerten. Damit werden vorzugsweise nicht bestimmte Werte, sondern aus diesen werden abgeleitete Größen, welche Abweichungen zu Referenzwerten darstellen, ausgegeben. Weiterhin ist es auch möglich, zwei- oder mehrstufige Toleranzgrenzen vorzugeben, beispielsweise festzulegen, dass, solange die Messgrößen um nicht mehr als 5% von einem Sollwert abweichen, keine Veränderungen vorgenommen werden, für den Fall, dass die Messgrößen zwischen 5% und 15% abweichen, bestimmte Stellgrößen zu verändern und für den Fall, dass die Messgrößen um mehr als 15% von dem Sollwert abweichen, die Maschine oder Vorrichtung anzuhalten.

Weitere Vorteile und Ausführungsformen ergeben sich aus den beigefügten Zeichnungen:

Darin zeigen:

Fig. 1     eine erfindungsgemäße Vorrichtung; und

Fig. 2     eine Detaildarstellung einer erfindungsgemäßen Regeleinheit.

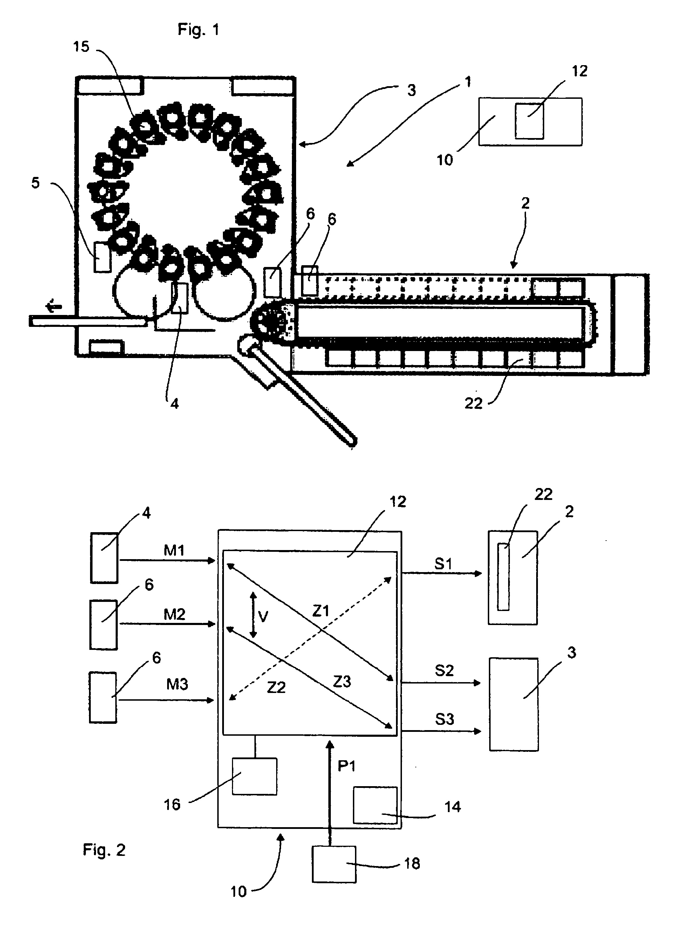

Fig. 1 zeigt eine erfindungsgemäße Vorrichtung 1 zum Herstellen von Behältnissen. Diese Vorrichtung 1 weist eine Erwärmungseinheit 2 auf, wie einen Durchlaufofen, in dem die Behältnisse erwärmt werden. Weiterhin ist stromabwärts bezüglich dieser Erwärmungseinheit 2 eine Blaseinheit 3 vorgesehen, in der die Vorformlinge zu Behältnissen expandiert werden. Bevorzugt sind die Erwärmungseinheit 2 und die Blaseinheit 3 miteinander gekoppelt bzw. synchronisiert.

Die Bezugzeichen 4, 5 und 6 beziehen sich auf verschiedene Messeinrichtungen, welche bestimmte charakteristische physikalische Zustände der Behältnisse messen, wie beispielsweise ein Bodengewicht, eine Wandungsdicke des Behältnisses, eine Temperatur des Vorformlings oder dergleichen. Auch ist es möglich, dass diese Sensoreinrichtungen 4, 5, 6 nicht nur charakteristische Werte, sondern charakteristische Verläufe, wie beispielsweise eine Blaskurvenaufzeichnung aufnehmen. Diese einzelnen Messgrößen werden an eine Regeleinheit 10 ausgegeben.

Die Regeleinheit 10 wiederum steht in Verbindung mit Anlagenteilen der Vorrichtung und erlaubt eine Veränderung unterschiedlicher Stellgrößen der Vorrichtung, wie beispielsweise einer Temperatur des Ofens 2, einer lokalen Erwärmung der Vorformlinge innerhalb des Ofens, einer Kühlung für die Behältnishälse, einer Oberflächenkühlung und dergleichen. Weiterhin weist die Regeleinheit 10 auch eine Zuordnungseinrichtung 12 auf, welche bestimmten Messgrößen die einzelnen Stellgrößen oder Stellgrößenänderungen zuordnet. Dabei können die Verbindungen zwischen den Messgrößen und den Stellgrößen, d. h. die Bedingungen, unter welchen bestimmte Stellgrößenänderungen vorgenommen werden, vom Benutzer frei festgelegt werden.

Das Bezugszeichen 22 zeigt eine Heizeinrichtung für die Erwärmungseinheit 2 und das Bezugszeichen 15 kennzeichnet ein Blaselement für die Behältnisse. Bezüglich dieses Blaselements 15 können unterschiedliche Arbeitsparameter bzw. Stellgrößen verändert werden, wie beispielsweise ein Druckverlauf, mit dem das Blaselement die Behältnisse expandiert.

Fig. 2 veranschaulicht die Arbeitsweise der Regeleinheit 10. Das Bezugszeichen 18 bezieht sich auf eine Eingabeeinheit, mittels der der Benutzer Werte oder Zuordnungen in die Zuordnungseinheit 12 bzw. die Regeleinheit 10 eingeben kann. Dabei kann beispielsweise vorab festgelegt werden, wie auf eine bestimmte Messgrößenänderung, d. h. beispielsweise eine Abweichung eines Bodengewichts von mehr als 10% reagiert werden soll. Auch können über diese Eingabeeinheit 18 die Toleranzgrenzen festgelegt werden. Schließlich ist es auch möglich, dass über die Eingabeeinrichtung Kommentare eingegeben werden, wie etwa die Gründe für eine bestimmte Änderung der Stellwerte.

Das Bezugszeichen 16 bezieht sich auf eine Speichereinrichtung, in der durchgeführte Änderungen des Benutzers und auch zusätzliche Eingaben des Benutzers, wie die Gründe für eine durchgeführte Änderung abgespeichert werden können. Im späteren Verlauf ist es möglich, dass die Regeleinheit 10 zunächst den Inhalt der Speichereinrichtung 16 abruft, um dem Benutzer bestimmte Änderungen der Stellwerte S1, S2, S3 vorzuschlagen. Auch die oben erwähnten Gründe für eine bestimmte Änderung der Stellwerte können in die Speichereinrichtung 16 eingelesen werden.

Über eine Anzeigeeinrichtung 14 können an den Benutzer die Messgrößen ausgegeben werden, sodass dieser in Reaktion auf die dargestellten Messgrößen bestimmte Änderungen vornehmen kann.

Die Regeleinheit 10 weist, wie oben gesagt, verschiedene Eingänge für Messgrößen M1, M2, M3 sowie auch eine Vielzahl von Ausgängen für die Stellgrößen S1, S2, S3 auf. Dabei können auch zusätzliche, d. h. nicht-belegte Eingänge vorgesehen sein, um eine Maschine eventuell zu einem späteren Zeitpunkt nachzurüsten, wenn weitere Sensoreinrichtungen zur Verfügung stehen. Entsprechendes gilt auch für die Ausgänge der Regeleinheit 10.

Die Messgrößen M1, M2, M3 werden von den Sensoreinrichtungen 4, 5, 6 an die Regeleinheit 10 geleitet und die Stellgrößen S1, S2, S3 von der Regeleinheit 10 an die Blaseinheit 3 und/oder die Erwärmungseinheit bzw. deren Arbeitselemente.

Daneben können auch Parameter für eine Mittelwertbildung festgelegt werden, beispielsweise, wie viele Verhältnisse zur Bildung eines Mittelwerts verwendet werden soll und auch, nach wie vielen Behältnissen eine Regelung jeweils stattfinden soll.

Die Zuordnungseinheit erlaubt beliebige Zuordnungen Z1, Z2, Z3, zwischen den Messgrößen M1, M2, M3 und den Stellgrößen S1, S2, S3, wobei diese Zuordnungen Z1, Z2, Z3 vorzugsweise auch noch Normierungsfaktoren aufweisen. Dabei können grundsätzlich auch solche Zuordnungen gebildet werden, die Messgrößen und Stellgrößen, zwischen denen kein Zusammenhang besteht, miteinander verbinden.

Das Bezugszeichen V bezieht sich auf eine logische Verknüpfung zwischen einzelnen Messgrößen. Durch diese Verknüpfung kann eine Veränderung eines Stellwerts von zwei logisch verknüpften Messwerten abhängig gemacht werden. Daneben kann auch eine Hierarchie bzw. Gewichtung zwischen einzelnen Messwerten vorgesehen sein, beispielsweise die Anweisung, einen bestimmten Messwert nach einem anderen Messwert abzufragen, oder nur dann, wenn ersterer Messwert ein bestimmtes Ergebnis aufweist.

**Patentansprüche**

1. Vorrichtung zum Herstellen von Behältnissen mit wenigstens einer Erwärmungseinheit (2), welche Vorformlinge erwärmt, wenigstens einer Blaseinheit (3), welche erwärmte Vorformlinge zu Behältnissen expandiert, wenigstens einer Sensoreinrichtung (4,5,6), welche wenigstens eine für einen physikalischen Zustand der Vorformlinge oder Behältnisse repräsentative Messgröße (M1, M2, M3) ausgibt, wobei wenigstens zwei Stellgrößen (S1, S2, S3) der Erwärmungseinheit (2) oder der Blaseinheit (3) veränderbar sind, und die Vorrichtung eine Regeleinheit (10) aufweist, welche derart gestaltet ist, dass sie die Stellgrößen (S1, S2, S3) in Abhängigkeit von der Messgröße (M1, M2, M3) regelt, wobei die Regeleinheit (10) eine Zuordnungseinrichtung (12) aufweist, welche vorgegebenen Messgrößen (M1, M2, M3) Stellgrößen (S1, S2, S3) zuordnet, **dadurch gekennzeichnet, dass** diese Zuordnungen zwischen den Messgrößen (M1, M2, M3) und den Stellgrößen (S1, S2, S3) <u>durch einen Benutzer</u> frei vorgebbar sind.

2. Vorrichtung nach Anspruch 1,
**dadurch gekennzeichnet, dass** die Vorrichtung (10) eine Speichereinrichtung (16) aufweist, in der getroffene Zuordnungen ablegbar sind.

3. Vorrichtung nach wenigstens einem der vorangegangenen Ansprüche,
**dadurch gekennzeichnet , dass** mehrere Sensoreinrichtungen (4, 5, 6) vorgesehen sind, welche mehrere für physikalische Zustände der vorformlinge oder Behältnisse repräsentative Messgrößen (M1, M2, M3) ausgeben.

4. Vorrichtung nach wenigstens einem der vorangegangenen Ansprüche,
**dadurch gekennzeichnet, dass** die physikalischen Zustände aus einer Gruppe von physikalischen Zuständen entnommen sind, welche eine Höhe des Behältnisses, ein Gewicht des Behältnisses, ein Gewicht eines Bodens des Behältnisses, einen Druckverlauf während des Blasvorgangs, eine Wandungsdicke des Behältnisses, eine Temperatur des Vorformlings, eine Temperatur einer Mündung des Behältnisses, eine geometrische Position eines Anspritzpunkts des Behältnisses, optische Eigenschaften des Behältnisses, Größenverhältnisse des Behältnisses, Kombinationen hieraus und dergleichen enthält.

5. Vorrichtung nach wenigstens einem der vorangegangenen Ansprüche,
**dadurch gekennzeichnet, dass** die Stellgrößen (S1, S2, S3) aus einer Gruppe von Stellgrößen ausgewählt sind, welche einen Vorblasdruck, einen Fertigblasdruck, einen Vorblasbeginn, einen Spülbeginn, eine Temperatur des Vorformlings, eine Temperatur der Formwand, eine Temperatur des Formbodens, den Zeitpunkt eines Spülbeginns, Kombinationen hieraus oder dergleichen enthält.

6. Verfahren zum Herstellen von Behältnissen, wobei in einem ersten Verfahrensschritt Vorformlinge erwärmt werden und in einem weiteren Verfahrensschritt die Vorformlinge zu Behältnissen expandiert werden und wobei mittels wenigstens einer Sensoreinrichtung (4,5,6) eine für einen physikalischen Zustand der Vorformlinge oder Behältnisse repräsentative Messgröße (M1, M2, M3) ausgegeben wird, und wobei wenigstens zwei Stellgrößen (S1, S2, S3) der Erwärmungseinheit (2) oder der Blaseinheit (3) veränderbar sind, und eine Regeleinheit (10) die Stellgrößen (S1, S2, S3) in Abhängigkeit von den Messgrößen (M1, M2, M3) regelt, wobei eine Zuordnungseinheit (12) vorgegebenen Messgrößen (M1, M2, M3) Stellgrößen (S1, S2, S3) zuordnet, **dadurch gekennzeichnet, dass** diese Zuordnungen zwischen den Messgrößen (M1, M2, M3) und den Stellgrößen (S1, S2, S3) <u>durch einen Benutzer</u> frei vorgebbar sind.

7. Verfahren nach Anspruch 6,
**dadurch gekennzeichnet, dass** in einer Speichereinrichtung (16) getroffene Zuordnungen abgelegt werden.

8. Verfahren nach wenigsten einem der vorangegangenen Ansprüche 6 - 7,
**dadurch gekennzeichnet, dass** mit den Zuordnungen die Messgrößen (M1, M2, M3) beschreibende Daten abgelegt werden.

9. verfahren nach wenigsten einem der vorangegangenen Ansprüche 6 - 8,
**dadurch gekennzeichnet, dass** Hinweise für geeignete Zuordnungen ausgegeben werden.

10. Verfahren nach wenigsten einem der vorangegangenen Ansprüche 6 - 9,
**dadurch gekennzeichnet, dass** neben den Zuordnungskriterien Toleranzgrenzen vorgebbar sind.

11. Verfahren nach wenigsten einem der vorangegangenen Ansprüche 6 - 10,
**dadurch gekennzeichnet, dass** die Messgrößen (M1, M2, M3) logisch verknüpfbar sind.

12. Verfahren nach wenigsten einem der vorangegangenen Ansprüche 6 - 10,
**dadurch gekennzeichnet, dass** die Messgrößen (M1, M2, M3) Abweichungen zu Referenzwerten sind.

13. Verfahren nach wenigstens einem der vorangegangenen Ansprüche 6 - 12,

**dadurch gekennzeichnet, dass** in der Speichereinrichtung (16) zumindest ein Teil der Messgrößen (M1, M2, M3) in Zusammenhang mit den durchgeführten Änderungen der Stellgrößen (S1, S2, S3) abgelegt wird.

14. Verfahren nach Anspruch 13,
    **dadurch gekennzeichnet, dass** im Rahmen der Prozessregelung die gespeicherten Zusammenhänge aus der Speichereinrichtung (16) abgerufen werden.

**Claims**

1. Apparatus for producing containers, comprising at least one heating unit (2) which heats preforms, at least one blow moulding unit (3) which expands heated preforms to form containers, at least one sensor device (4, 5, 6) which outputs at least one measured parameter (M1, M2, M3) representative of a physical state of the preforms or containers, wherein at least two control parameters (S1, S2, S3) of the heating unit (2) or of the blow moulding unit (3) can be varied, and the apparatus comprises an adjusting unit (10) which is configured in such a way that it adjusts the control parameters (S1, S2, S3) as a function of the measured parameter (M1, M2, M3), wherein the adjusting unit (10) comprises an associating device (12) which associates control parameters (S1, S2, S3) with predefined measured parameters (M1, M2, M3), **characterised in that** these associations between the measured parameters (M1, M2, M3) and the control parameters (S1, S2, S3) can be freely predefined by an operator.

2. Apparatus according to claim 1, **characterised in that** the apparatus (10) comprises a memory device (16) in which associations that have been made can be stored.

3. Apparatus according to at least one of the preceding claims, **characterised in that** a plurality of sensor devices (4, 5, 6) are provided which output a plurality of measured parameters (M1, M2, M3) representative of physical states of the preforms or containers.

4. Apparatus according to at least one of the preceding claims, **characterised in that** the physical states are selected from a group of physical states comprising a height of the container, a weight of the container, a weight of a base of the container, a pressure profile during the blow moulding operation, a wall thickness of the container, a temperature of the preform, a temperature of a mouth of the container, a geometric position of an injection point of the container, optical properties of the container, size ratios of the container, combinations thereof and the like.

5. Apparatus according to at least one of the preceding claims, **characterised in that** the control parameters (S1, S2, S3) are selected from a group of control parameters comprising a pre-blowing pressure, an end-of-blowing pressure, a start of pre-blowing, a start of rinsing, a temperature of the preform, a temperature of the mould wall, a temperature of the mould bottom, the time of a start of rinsing, combinations thereof or the like.

6. Method for producing containers, wherein preforms are heated in a first method step, and in a further method step the preforms are expanded to form containers, and wherein a measured parameter (M1, M2, M3) representative of a physical state of the preforms or containers is output by means of at least one sensor device (4, 5, 6), and wherein at least two control parameters (S1, S2, S3) of the heating unit (2) or of the blow moulding unit (3) can be varied, and an adjusting unit (10) adjusts the control parameters (S1, S2, S3) as a function of the measured parameters (M1, M2, M3), wherein an associating unit (12) associates control parameters (S1, S2, S3) with predefined measured parameters (M1, M2, M3), **characterised in that** these associations between the measured parameters (M1, M2, M3) and the control parameters (S1, S2, S3) can be freely predefined by an operator.

7. Method according to claim 6, **characterised in that** associations that have been made are stored in a memory device (16).

8. Method according to at least one of the preceding claims 6 to 7, **characterised in that** data describing the measured parameters (M1, M2, M3) are stored with the associations.

9. Method according to at least one of the preceding claims 6 to 8, **characterised in that** indications of suitable associations are output.

10. Method according to at least one of the preceding claims 6 to 9, **characterised in that** tolerance limits can be predefined in addition to the association criteria.

**11.** Method according to at least one of the preceding claims 6 to 10, **characterised in that** the measured parameters (M1, M2, M3) can be logically linked.

**12.** Method according to at least one of the preceding claims 6 to 10, **characterised in that** the measured parameters (M1, M2, M3) are deviations from reference values.

**13.** Method according to at least one of the preceding claims 6 to 12, **characterised in that** at least some of the measured parameters (M1, M2, M3) are stored in the memory device (16) in combination with the changes made to the control parameters (S1, S2, S3).

**14.** Method according to claim 13, **characterised in that** the stored combinations are called up from the memory device (16) in the context of process control.

**Revendications**

**1.** Dispositif pour la fabrication de récipients, comportant au moins une unité de chauffage (2) qui chauffe des préformes, au moins une unité de soufflage (3) qui dilate les préformes chauffées pour en faire des récipients, au moins un dispositif à capteurs (4, 5, 6) qui délivre au moins une grandeur de mesure (M1, M2, M3) représentative d'un état physique des préformes ou des récipients, au moins deux grandeurs de réglage (S1, S2, S3) de l'unité de chauffage (2) ou de l'unité de soufflage (3) étant modifiables, et le dispositif comportant une unité de réglage (10) prévue pour régler les grandeurs de réglage (S1, S2, S3) en fonction de la grandeur de mesure (M1, M2, M3), l'unité de réglage (10) comportant un dispositif d'association (12) qui associe des grandeurs de réglage (S1, S2, S3) à des grandeurs de mesure (M1, M2, M3) données,
**caractérisé en ce que** lesdites associations entre les grandeurs de mesure (M1, M2, M3) et les grandeurs de réglage (S1, S2, S3) sont librement définissables par un utilisateur.

**2.** Dispositif selon la revendication 1,
**caractérisé en ce que** le dispositif (10) comporte un dispositif de mémorisation (16) où les associations concernées peuvent être sauvegardées.

**3.** Dispositif selon au moins une des revendications précédentes,
**caractérisé en ce que** plusieurs dispositifs à capteurs (4, 5, 6) sont prévus, lesquels délivrent plusieurs grandeurs de mesure (M1, M2, M3) représentatives des états physiques des préformes ou des récipients.

**4.** Dispositif selon au moins une des revendications précédentes,
**caractérisé en ce que** les états physiques sont prélevés dans un groupe d'états physiques comprenant une hauteur du récipient, un poids du récipient, un poids d'un fond du récipient, une courbe de pression pendant le soufflage, une épaisseur de paroi du récipient, une température de la préforme, une température d'une embouchure du récipient, une position géométrique d'un point d'injection du récipient, des propriétés optiques du récipient, des rapports de grandeur du récipient, des combinaisons de ceux-ci et similaires.

**5.** Dispositif selon au moins une des revendications précédentes,
**caractérisé en ce que** les grandeurs de réglage (S1, S2, S3) sont sélectionnées dans un groupe de grandeurs de réglage comprenant une pression de présoufflage, une pression de soufflage final, un début de rinçage, une température de la préforme, une température de paroi du moule, une température du fond de moule, le moment de début du rinçage, des combinaisons de celles-ci ou similaires.

**6.** Procédé de fabrication de récipients, où des préformes sont chauffées lors d'une première étape de procédé et lesdites préformes sont dilatées pour former des récipients lors d'une autre étape de procédé, une grandeur de mesure (M1, M2, M3) représentative d'un état physique des préformes ou des récipients étant délivrée au moyen d'au moins un dispositif à capteurs (4, 5, 6), au moins deux grandeurs de réglage (S1, S2, S3) de l'unité de chauffage (2) ou de l'unité de soufflage (3) étant modifiables, une unité de réglage (10) réglant les grandeurs de réglage (S1, S2, S3) en fonction des grandeurs de mesure (M1, M2, M3), et une unité d'association (12) associant des grandeurs de réglage (S1, S2, S3) à des grandeurs de mesure (M1, M2, M3) données,
**caractérisé en ce que** lesdites associations entre les grandeurs de mesure (M1, M2, M3) et les grandeurs de réglage (S1, S2, S3) sont librement définissables par un utilisateur.

**7.** Procédé selon la revendication 6,
**caractérisé en ce que** les associations concernées sont sauvegardées dans un dispositif de mémorisation (16).

**8.** Procédé selon au moins une des revendications 6 à 7,
**caractérisé en ce que** des données décrivant les grandeurs de mesure (M1, M2, M3) sont sauvegardées avec les associations.

**9.** Procédé selon au moins une des revendications 6 à 8,
**caractérisé en ce que** des indications relatives à des associations pertinentes sont émises.

**10.** Procédé selon au moins une des revendications 6 à 9,
**caractérisé en ce que** des limites de tolérances sont définissables en plus des critères d'association.

**11.** Procédé selon au moins une des revendications 6 à 10,
**caractérisé en ce que** les grandeurs de mesure (M1, M2, M3) sont chaînables logiquement.

**12.** Procédé selon au moins une des revendications 6 à 10,
**caractérisé en ce que** les grandeurs de mesure (M1, M2, M3) sont des écarts par rapport à des valeurs de référence.

**13.** Procédé selon au moins une des revendications 6 à 12,
**caractérisé en ce qu'**au moins une partie des grandeurs de mesure (M1, M2, M3) est sauvegardée dans le dispositif de mémorisation (16) en corrélation avec les modifications effectuées sur les grandeurs de réglage (S1, S2, S3).

**14.** Procédé selon la revendication 13,
**caractérisé en ce que** les corrélations mémorisées sont extraites du dispositif de mémorisation (16) dans le cadre de la régulation de processus.

Fig. 1

Fig. 2

**IN DER BESCHREIBUNG AUFGEFÜHRTE DOKUMENTE**

**In der Beschreibung aufgeführte Patentdokumente**

- DE 102005044206 A1
- EP 1175990 B1
- WO 2006087251 A1
- DE 10116665 A1
- DE 102004026640 A1